Europäisches Patentamt

European Patent Office

Office européen des brevets

(19)

(11) Publication number: **0 046 079**
**B1**

(12) **EUROPEAN PATENT SPECIFICATION**

(45) Date of publication of patent specification: **14.05.86**

(51) Int. Cl.⁴: **G 01 B 7/12, G 01 B 7/28**

(21) Application number: **81303629.0**

(22) Date of filing: **07.08.81**

(54) **Apparatus for inspecting a heat exchanger tube.**

(30) Priority: **08.08.80 US 176427**

(43) Date of publication of application:
**17.02.82 Bulletin 82/07**

(45) Publication of the grant of the patent:
**14.05.86 Bulletin 86/20**

(84) Designated Contracting States:
**CH DE FR GB IT LI**

(56) References cited:
**EP-A-0 018 826**
**DE-A-3 032 424**
**GB-A-2 010 492**
**US-A-2 656 613**
**US-A-2 782 365**
**US-A-2 933 819**
**US-A-3 302 105**
**US-A-4 006 530**

The file contains technical information
submitted after the application was filed and
not included in this specification

(73) Proprietor: **THE BABCOCK & WILCOX COMPANY**
**1010 Common Street P.O. Box 60035**
**New Orleans Louisiana 70160 (US)**

(72) Inventor: **Gutzwiller, James E. Jr.**
**403 Ramblewood Road**
**Forest Virginia 24551 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to an apparatus for inspecting a heat exchanger tube. An embodiment of the invention described hereinbelow can be used for determining, in-situ, the integrity of heat exchanger tubes. More particularly, the apparatus embodying this invention can be used for determining, in-situ, in heat exchanger tubes, the location, physical dimensions and character of abnormalities such as, but not limited to, dents, out-of-roundness, inside diameter variations and the like.

The identification and measurement of such abnormalities in steam generators used in nuclear power producing units is of critical importance. Such generators may include upwards of sixteen thousand thin walled, small bore tubes. As an order of magnitude, such tubes may have an outside diameter of 15.875 mm (0.625 in), a wall thickness of 0.864 mm (0.034 in) and a length of 20 m (60 ft) or more. The tubes are held in a desired configuration within the generator by a plurality of support plates, distributed along their lengths, and by relatively thick tube sheets at their ends, which also seal the interior from the exterior of the tubes.

Before being placed in service, and during operation, it is essential that the tubes in such generators be free of significant abnormalities. It is therefore an established requirement that the tubes be inspected prior to being placed in service and periodically thereafter so that the location and physical dimensions of such abnormalities, if any, can be determined and a decision made as to the seriousness thereof and the corrective action to be taken.

The generation of eddy current signatures to identify certain types of tube abnormalities is well established in the art. Reference may be made, for example, to US Patent No. US—A—3 302 105 which illustrates and describes the eddy current signatures of various types of tube abnormalities which may be detected by this method. This method is not capable, however, of accurately measuring, as contrasted to detecting, the physical dimensions of tube abnormalities such as dents, and inside diameter variations.

US Patent No. US—A—2 782 365 discloses apparatus for inspecting a tube, the apparatus having a scanner which is capable of being drawn through the tube and comprises an eddy current sensor which is electromagnetically coupled with the tube to generate a signal corresponding to changes in the electromagnetic coupling as the scanner is drawn through the tube. The eddy current sensor comprises a pair of windings which are disposed in axially spaced grooves in an elongate steel mandrel (tube). Each winding is disposed concentrically of the axis of the mandrel and in a plane which is perpendicular to the axis of the mandrel. Naturally, since it comprises only an eddy current sensor, the apparatus of US—A—2 782 365 is capable of detecting (as opposed to accurately measuring) tube internal abnormalities.

Apparatus for inspecting a heat exchanger tube is disclosed in our published European Patent Application No. EP—A—0 018 826. The apparatus disclosed in EP—A—0 018 826 comprises a scanner which is capable of being drawn through the tube, a flexible spring having one end anchored to a cylindrical body portion of the scanner adjacent its outer circumference and a portion arranged to contact the interior wall of the tube as the scanner is drawn through the tube, a strain gauge operatively connected to the flexure spring and responsive to flexing of the flexure spring to generate a signal corresponding to the response of the strain gauge to the flexing of the flexure spring, and an eddy current sensor incorporated in the scanner to be electromagnetically coupled with a heat exchanger tube as the scanner is drawn through the tube to generate a signal corresponding to changes in the electromagnetic coupling as the scanner is drawn through the tube, the eddy current sensor comprises a winding which is disposed concentrically of the axis of the cylindrical body portion and in a plane which is perpendicular to the axis of the body portion. The apparatus also includes strain gauges consisting of windings. The priority and publication dates of EP—A—0 018 826 are 2 May 1979 and 12 November 1980, rspectively, so that the disclosure of EP—A—0 018 826 forms part of the state of the art (as regards the present application) by virtue only of EPC Article 54(3).

Strain gauges consisting of windings are well known.

US Patent No. US—A—2 933 819 discloses apparatus for inspecting a tube, the apparatus comprising a scanner which is capable of being drawn through the tube, a flexure spring having one end anchored to a cylindrical body portion of the scanner adjacent its outer circumference and a portion aranged to contact the interior wall of the tube as the scanner is drawn through the tube, and a strain gauge operatively connected to the flexure spring and responsive to flexing of the flexure spring to generate a signal corresponding to the response of the strain gauge to the flexing of the flexure spring. Such an apparatus (referred to hereinafter as "apparatus of the type described") enables measurement of tube internal abnormalities. However, in not comprising an eddy current sensor, the apparatus lacks an advantage associated with the use of an eddy current sensor, namely the ability to detect structural discontinuities that may comprise cracks in the tube or positions ("bench marks") along the length of the tube where a support plate or the like engages the tube.

The present invention provides apparatus of the type described, characterised in that:

the strain gauge has a winding responding to the flexing of the flexure spring;

an eddy current sensor is incorporated in the scanner to be electromagnetically coupled with a heat exchanger tube as the scanner is drawn through the tube to generate a second signal corresponding to changes in the electromagnetic coupling as the scanner is drawn through the tube;

the eddy current sensor comprises a winding which is disposed concentrically of the axis of the cylindrical body portion and in a plane which is perpendicular to the axis of the body portion; and

said plane is substantially coincident with a plane which passes through said contact portion of the flexure spring.

By virtue of the fact that the apparatus includes an eddy current sensor and that the two planes mentioned above are substantially coincident (i.e. are exactly coincident or are spaced slightly apart), the signals produced by the strain gauge and by the eddy current sensor are representative of the same position along the tube.

Apparatus embodying this invention and described hereinbelow will, in-situ, accurately locate and measure the size of the tube abnormalities, and will determine the inside diameter and the out-of-roundness of a heat exchanger tube throughout its entire length. The apparatus is simple to operate, requires a minimum of down time of the heat exchanger, and enables the inspection of the heat exchanger tubes located in a hostile environment to be remotely controlled by an operator located in a benign environment.

The invention will now be further described, by way of illustrative and non-limiting example, with reference to the accompanying drawings, in which:

Figure 1 is a schematic illustration of a composite scanner as applied to the in-situ inspection of a typical nuclear steam generator tube, as described in EP—A—0 018 826 (cited above);

Figure 2 is a longitudinal cross-sectional view of the composite scanner shown in Figure 1;

Figure 2A is a fragmentry view illustrating a modification in accordance with the present invention of the scanner shown in Figure 2;

Figure 3 is an end view of the composite scanner of Figure 2 taken along the line 3—3 of Figure 2 in the direction of the arrows;

Figure 4 is a fragmentary view of a spring finger of the scanner;

Figure 5 is an elementary wiring diagram of measuring circuits incorporated in an inspection system or apparatus incorporating the composite scanner;

Figure 6 is a block diagram of read-out equipment incorporated in the inspection system; and

Figure 7 is a fragmentary view of part of a typical recording of the read-out equipment illustrated in Figure 6.

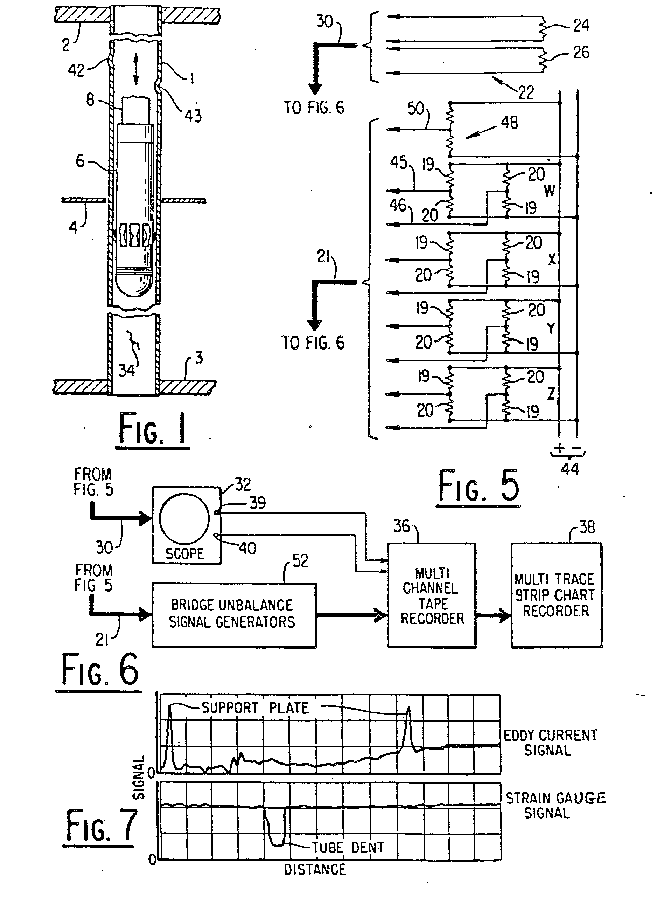

Referring to the drawings, wherein like reference characters designate like or corresponding parts throughout the several views, there is shown in Figure 1 a cross-section of a fragment of a tube 1, as incorporated in a nuclear steam generator, supported at its upper end by a tube sheet 2 and at its lower end by a tube sheet 3. The tube sheets 2 and 3 are welded to the tube 1 so that a fluid circulated through the tube, which may be the primary coolant, is isolated from the water and steam surrounding the exterior of the tube.

Distributed along the length of the tube 1 are a plurality of support plates 4 which hold the tube in a desired position. The tube 1 is not secured to the support plates 4 by welding or the like, but passes through, with close tolerance, holes drilled or otherwise formed in the plates, which are also provided with passageways for the flow of water and/or steam along the exterior of the tube. As a tube sheet may, for present purposes, be considered a special type of support plate, the generic term 'support plate' will hereinafter be used.

Shown within the tube 1 is a composite scanner 6 attached to a cable 8 for drawing the scanner through the tube at a selected speed, usually in the order of 30 cm (1 ft) per second. Various arrangements are known for drawing a scanner through a tube. One such arrangement, particularly suited to the scanning of tubes in a nuclear steam generator, is illustratd and described in US Patent No. US—A—4 172 492. In making a scan, the scanner 6 is ordinarily positioned at one end of the tube 1, or at a predetermined bench mark, as, for example, a selected support plate, and then drawn through the tube by a remotely located drive mechanism (not shown) at the selected speed.

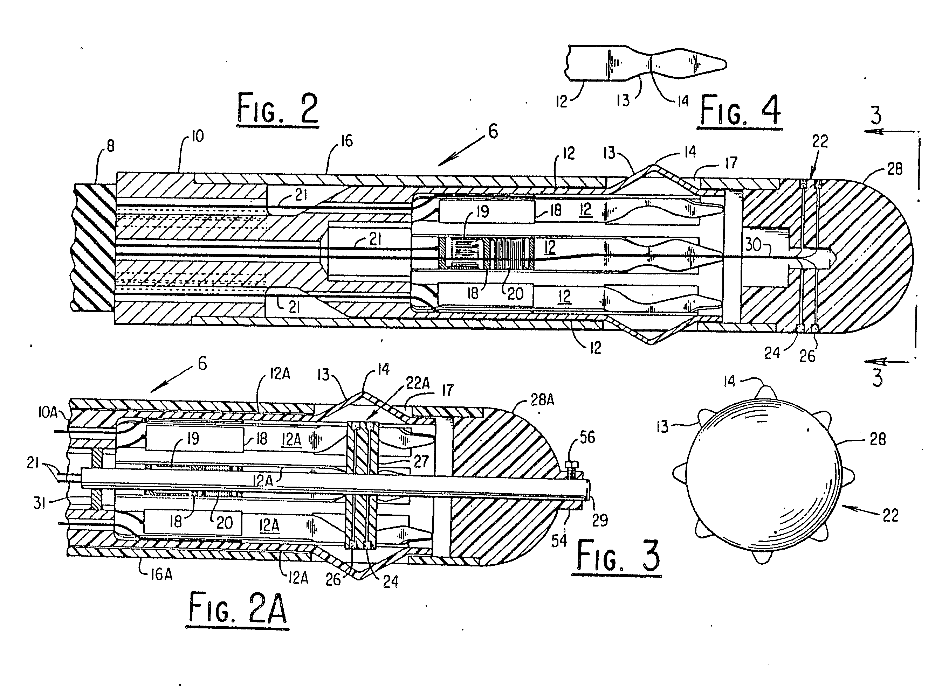

Figures 2 and 3 show the scanner 6, respectively, in longitudinal cross-section and as viewed along the line 3—3 of Figure 2 in the direction of the arrows. A cylindrical body 10 is provided with a plurality of cantilever, spring fingers 12, equally spaced about the circumference of the body. In the illustrated arrangement there are eight of the spring fingers 12. The spring fingers 12 may be formed integrally with the body or securely anchored thereto by any suitable means. Near its free end a section of each finger 12 is bent to form an outwardly extending crook 13, necked down to form a cusp 14, as shown in Figure 4. In making a tube scan, the cusps 14 bear against the tube wall and follow changes in contour as may be caused by dents, diameter variations and the like. Preferably, but not essentially, the fingers 12 are enclosed in a protective shroud or sheath 16, secured to the body 10, and provided with openings or apertures 17 through which the crooks 13 project.

To each finger 12 there is secured, preferably at or near the pint of maximum strain adjacent the body 10, a bi-axial strain gauge 18, provided with a winding 19 running parallel with the longitudinal centre-line of the finger and a winding 20 running at right angles to the centre-line. The resistance of the winding 19 changes in proportion to the changes in ambient temperature and the deflection of the spring finger 12 from a null or neutral position. The resistance of the winding 20 is substantially unaffected by deflection of the spring finger 12, but changes resistance in proportion to changes in ambient temperature. Each strain gauge winding 19, 20 is provided with leads, such as shown at 21, running through pasageways formed in the body 10 and through the cable 8 to signal receiving instrumentation, to be described later.

Incorporated in the composite scanner 6 is an eddy current sensor, generally indicated at 22, comprising differential windings 24, 26 housed in a body 28 of insulating material such as nylon, carried by and secured in the sheath 16. Leads 30 running through the body 10 and cable 8 transmit signals generated by the eddy current sensor 22 to the signal receiving instrumentation. In traversing a tube, the cusps 14, as shown in Figure 1, bear against the interior wall of the tube causing each finger 12 to bend from the predetermined null or normal position in accordance with variations in the tube profile.

In Figure 5, a circuit configuration is shown whereby, in traversing a tube, the deflection of each spring finger 12 from a null or neutral position may be determined, or the algebraic sum of the deflections of any two spring fingers from a null or neutral position may be determined. As it is ordinarily the algebraic sum of the deflections of diametrically opposite spring fingers which is of interest, Figure 5 shows the eight spring fingers incorporated in four bridge circuits W, X, Y, Z and energized from a source of potential 44, wherein the diametrically opposite strain gauges 18 are arranged in push-pull relationship. The potential difference, or bridge unbalance, as it may be termed, appearing across leads 45, 46 of any one of the bridge circuits W, X, Y, Z is therefore a measure of the algebraic sum of the deflections of the diametrically opposite spring fingers 12. It is apparent that the algebraic sum of the deflections of any two spring fingers, as for example, adjacent spring fingers, can be determined by the potential difference between any two leads 45, two leads 46, or any combination of leads 45, 46.

Also incorporated in the circuit configuration is a voltage divider 48, comprising two series-connected windings, generating a predetermined potential appearing on a lead 50. Accordingly, changes in the difference in potentials between the lead 50 and any one of the leads 45 or 46 of the bridge circuits W, X, Y, Z will be a measure of the displacement of the spring finger 12 from a null or neutral position in traversing a tube. From the displacements of all of the spring fingers 12 the shape of the tube at any one or all points in the traverse can be determined.

The potential of the lead 50 and the potentials of the leads 45, 46 for each of the bridge circuits W, X, Y, Z, collectively identified as leads 21 in Figure 5, are transmitted to suitable read-out devices such as those shown in Figure 6. Signals corresponding to bridge unbalances are generated in a device 52 comprising a number of bridge unbalance signal generators, the number of such signal generators depending upon the particular type of tube scan. Thus, four such signal generators would be required to simultaneously read out the algebraic sum of the deflectors of eight diametrically opposite spring fingers, whereas eight such generators would be required to simultaneously read out the deflections of each spring finger from a null or neutral position. The signals generated in the device 52 can be transmitted to a variety of read-out devices as dicated by a particular application. As examples of such devices, Figure 6 shows a tape recorder 36 and a strip chart recorder 38 responsive to the signals generated in the device 52. From the read-out devices such significant data as the inside tube radial dimensions at eight points at any one or all points in the tube traverse can be plotted or digitised.

The electrical connections from the eddy current sensor 22 are carried through the leads 30 to an eddy current tester 32, such as a Zetec/Automation EM 3300 Eddy Current Tester, which incorporates a scope. The signature appearing on the scope of the tester 32, as the scanner 6 traverses a tube, will vary depending upon the character of the tube. A minor horizontal deflection is obtained representative of sensor wobble, whereas tube abnormalities such as a crack shown at 34 in Figure 1 will generate on the scope a pattern from which the type of flaw can be determined. In traversing the tube adjacent a support plate, a fat two-lobed signature of the support plate is generated as discussed in US Patent No. US—A—4 194 149. The abrupt change in either the horizontal or vertical component of the eddy current signature available at terminals 39, 40 at the nearest support plate can therefore be taken as a bench mark, from which, knowing the speed of the scanner in traversing a tube, the exact location of a tube defect can be determined. To provide proper correlation, as shown, the signals available at the terminals 39, 40 are transmitted to the tape recorder 36 and strip chart recorder 38 simultaneously with the readings from the strain gauges.

In Figure 7 there is shown a fragment of typical chart traces of one component, either horizontal or vertical, of an eddy current sensor and the signal output of one strain gauge bridge or a single spring finger generated by the composite scanner 6 in traversing a tube. As shown, the eddy current signal abruptly changes at a support plate and provides a bench mark by which, knowing the ratio between scanner and chart speeds, the location of a dent, such as shown at 42 and 43 in Figure 1, relative to the support plate 4 can be accurately determined. Other tube abnormalities such as variations in diameter, out-of-roundness and the like encountered during a traverse can be accurately located. The physical dimensions and contour of the abnormality can be determined by an analysis of the signal outputs as recorded on the tape recorder 36 or the chart recorder 38.

With the construction shown in Figure 2, because of the axial displacement of the eddy current sensor 22 from the cusps 14, the distance as indicated or recorded by the read-out equipment shown in Figure 6 must be subjected to a correction proportional to such axial displacement. In Figure 2A there is shown a modified construction of the scanner 6 in accordance with the present invention whereby the necessity for such a correction is eliminated. As shown therein, a body 10A made of a non-conductive, non-metallic spring material is provided with cantilevered spring fingers 12A which may be formed integrally with the body or securely anchored thereto by any suitable means. Near its free end, a section of each finger 12A is bent to form the outwardly extending crook 13, necked down to form the cusp 14. Preferably, the fingers 12A are enclosed in a protective shroud or sheath 16A, also made of non-conductive, non-metallic insulating material, secured to the body 10A and provided with openings or apertures 17 through which the crooks 13 project.

An eddy current sensor 22A is housed in a disc 27 secured to a rod or, preferably, a hollow tube 29 through which leads 30 run. The sensor 22A comprises windings 24, 26 disposed in the circumference of the disc 27, which is of an insulative material. The tube 29 is supported by and axially movable in a body or nose piece 28A and a spider 31, each made of an insulative material. The eddy current sensor 22A is located in a plane which is normal to the longitudinal axis of the sensor and which passes through the cusps 14 thereby eliminating the correction required in determining the axial locations of tube abnormalities. Due to electrical distortions, it may be necessary to have the sensor 22A slightly displaced from the plane of the cusps 14 so that the abrupt change in either the horizontal or vertical component of the eddy current will occur coincident with the cusps 14 taking the same position relative to a support plate. To facilitate such minor adjustments, the nose piece 28A may be provided with a boss 54 and set screw 56, by which, after the desired axial location of the eddy current sensor 22A has been determined, the tube 29 can be clamped and firmly held in position.

## Claims

1. Apparatus for inspecting a tube, the apparatus comprising a scanner (6) which is capable of being drawn through the tube (1), a flexure spring (12A) having one end anchored to a cylindrical body portion (10A) of the scanner (6) adjacent its outer circumference and a portion (14) arranged to contact the interior wall of the tube (1) as the scanner (6) is drawn through the tube (1), and a strain gauge (18) operatively connected to the flexure spring (12A) and responsive to flexing of the flexure spring (12A) to generate a first signal corresponding to the response of the strain gauge (18) to the flexing of the flexure spring, characterised in that:

the strain gauge has a winding (19) responding to the flexing of the flexure spring (12A);

an eddy current sensor (22A) is incorporated in the scanner (6) to be electromagnetically coupled with the tube (1), being a heat exchanger tube, as the scanner is drawn through the tube to generate a second signal corresponding to changes in the electromagnetic coupling as the scanner (6) is drawn through the tube (1);

the eddy current sensor (22A) comprises a winding (24, 26) which is disposed concentrically of the axis of the cylindrical body portion (10A) and in a plane which is perpendicular to the axis of the body portion (10A); and

said plane is substantially coincident with a plane which passes through said contact portion (14) of the flexure spring (12A).

2. Apparatus according to claim 1, including a disc (27) of insulative material in the circumference of which the winding (24, 26) of the eddy current sensor (22A) is disposed.

3. Apparatus according to claim 2, wherein the disc (27) is mounted on an elongate member (29) which is supported by and axially movable relative to the cylindrical body portion (10A).

4. Apparatus according to claim 1, claim 2 or claim 3, including a cylindrical shroud (16A) secured to the cylindrical body portion (10A) around its outer circumference, the shroud (16A) surrounding the flexure spring (12A) and having an aperture (17) through which said contact portion (14) of the flexure spring (12A) extends.

5. Apparatus according to any one of the preceding claims, including a plurality of said flexure springs (12A) spaced around the axis of the cylindrical body portion (10A).

6. Apparatus according to any one of the preceding claims, in combination with the tube (1) to be inspected, wherein the tube (1) is provided with a contiguous support plate (4) that maintains the tube in a predetermined position and effects a unique change in the electromagnetic coupling between the winding (24, 26) of the eddy current sensor (22A) and the tube (1) as the scanner (6) traverses the tube adjacent to the support plate (4) to thereby generate a unique change in said second signal and establish a bench mark identifying a point in the travel of the scanner through the tube.

7. Apparatus according to claim 6, wherein the tube (1) is provided with a plurality of spaced apart support plates (4) that maintain the tube in a predetermined position and each effect a unique change in the magnetic coupling between the winding (24, 26) of the eddy current sensor (22A) and the tube (1) as the scanner (6) traverses the tube adjacent to each of the support plates (4) to thereby establish a plurality of bench marks equal in number to the number of support plates traversed by the scanner.

## Patentansprüche

1. Vorrichtung zur Inspektion eines Rohres mit einer Abtasteinrichtung (6), die durch das Rohr (1) gezogen werden kann, eine Biegungsfeder (12A), deren eines Ende an einem zylindrischen Körperabschnitt (10A) der Abtasteinrichtung. (6) nahe ihrem Außenumfang verankert ist und die einen Abschnitt (14) hat, der in Berührung mit der Innenwand des Rohres (1) steht, wenn die Abtasteinrichtung (6) durch das Rohr (1) gezogen wird, und mit einem Dehnungsmeßgerät (18), das funktionsmäßig mit der Biegungsfeder (12A) verbunden ist und auf ein Biegen der Biegungsfeder (12A) reagiert, um ein erstes Signal entsprechend der Reaktion des Dehnungsmeßgerätes (18) auf das Biegen der Biegungsfeder (12A) zu erzeugen, dadurch gekennzeichnet, daß das Dehnungsmeßgerät eine Wicklung (19) hat, die auf das Biegen der Biegungsfeder (12A) anspricht, ein Wirbelstromsensor (22A) in der Abtasteinrichtung (6) angeordnet ist, um elektromagnetisch mit dem Rohr (1), das ein Wärmeaustauscherrohr ist, gekoppelt zu werden, wenn die Abtasteinrichtung durch das Rohr gezogen wird, um ein zweites Signal entsprechend den Veränderungen der elektromagnetischen Kopplung zu erzeugen, wenn die Abtasteinrichtung (6) durch das Rohr (1) gezogen wird, der Wirbelstromsensor (22A) eine Wicklung (24, 26) aufweist, die konzentrisch zu der Achse des zylindrischen Körperabschnitts (10A) und in einer Ebene, die senkrecht zu der Achse des Körperabschnitts (10A) liegt, angeordnet ist, und diese Ebene im wesentlichen mit einer Ebene zusammenfällt, die durch den Berührungsabschnitt (14) der Biegungsfeder (12A) geht.

2. Vorrichtung nach Anspruch 1 mit einer Scheibe (27) aus isolierendem Material, in deren Umfang die Wicklung (24, 26) des Wirbelstromsensors (22A) angeordnet ist.

3. Vorrichtung nach Anspruch 2, bei der die Scheibe (27) auf einem länglichen Teil (29) befestigt ist, das von dem zylindrischen Körperabschnitt (10A) getragen und bezüglich desselben axial bewegbar ist.

4. Vorrichtung nach Anspruch 1, Anspruch 2 oder Anspruch 3 mit einer zylindrischen Abdeckung (16A), die auf dem zylindrischen Körperabschnitt (10A) um seinen Außenumfang herum befestigt ist, wobei die Abdeckung (16A) die Biegungsfeder (12A) umgibt und eine Öffnung (17) hat, durch welche der Berührungsabschnitt (14) der Biegungsfeder (12A) sich erstreckt.

5. Vorrichtung nach einem der vorausgehenden Ansprüche mit mehreren der Biegungsfedern (12A), die um die Achse des zylindrischen Körperabschnittes (10A) herum im Abstand voneinander angeordnet ist.

6. Vorrichtung nach einem der vorausgehenden Ansprüche in Verbindung mit dem zu inspizierenden Rohr (1), wobei das Rohr (1) mit einer angrenzenden Trägerplatte (4) versehen ist, die das Rohr in einer vorbestimmten Position hält und eine einzige Veränderung der elektromagnetischen Kopplung zwischen der Wicklung (24, 26) des Wirbelstromsensors (22A) und dem Rohr (1) bewirkt, wenn die Abtasteinrichtung (6) das Rohr nahe der Trägerplatte (4) durchquert, um dabei eine einzige Veränderung des zweiten Signals zu erzeugen und einen Festpunkt zu bilden, der einen Punkt auf dem Weg der Abtasteinrichtung durch das Rohr identifiziert.

7. Vorrichtung nach Anspruch 6, bei der das Rohr (1) mit mehreren im Abstand voneinander angeordneten Trägerplatten (4) versehen ist, die das Rohr in einer vorbestimmten Position halten und jeweils eine einzige Veränderung der magnetischen Kopplung zwischen der Wicklung (24, 26) des Wirbelstromsensors (22A) und dem Rohr (1) bewirken, wenn die Abtasteinrichtung (6) das Rohr nahe einer jeden der Trägerplatten (4) durchquert, um so mehere Festpunkte zu bilden, deren Anzahl gleich der Anzahl der von der Abtasteinrichtung überquerten Trägerplatten ist.

## Revendications

1. Appareil d'inspection d'un tube, l'appareil comprenant un explorateur (6) susceptible d'être halé à travers le tube (1), un ressort flexible (12A) présentant une extrémité ancrée sur une partie de corps cylindrique (10A) de l'explorateur (6) près de sa périphérie extérieure et une partie (14) agencée pour porter contre la paroi intérieure du tube (1) lors du halage de l'explorateur (6) à travers le tube (1), et une jauge de contrainte (18) accouplée au ressort flexible (12A) et sensible à la flexion du ressort flexible (12A) pour engendrer un premier signal correspondant à la réponse de la jauge de contrainte (18) à la flexion du ressort flexible, caractérisé en ce que;

la jauge de contrainte comporte un enroulement (19) sensible à la flexion du ressort flexible (12A);

un capteur de courants de Foucault (22A) est incorporé à l'explorateur (6) pour entrer en couplage électromagnétique avec un tube 1, celui-ci étant un tube échangeur de chaleur lors du halage de l'explorateur à travers le tube pour engendrer un second signal correspondant aux modifications subies par le couplage électromagnétique pendant le halage de l'explorateur (6) à travers le tube (1);

le capteur de courants de Foucault (22A) comprend un enroulement (24, 26) disposé concentriquement à l'axe de la partie de corps cylindrique (10A) et dans un plan perpendiculaire à l'axe de la partie de corps (10A); et

ledit plan coïncide sensiblement avec un plan passant par ladite partie de contact (14) du ressort flexible (12A).

2. Appareil selon la revendication 1, comportant un disque (27) en matériau isolant dans la circonférence duquel est disposé l'enroulement (24, 26) du capteur de courants de Foucault (22A).

3. Appareil selon la revendication 2, dans lequel le disque (27) est monté sur un organe allongé (29) qui est supporté par, et mobile axialement par rapport à la partie de corps cylindrique (10A).

4. Appareil selon la revendication 1, 2 ou 3, comportant une calandre cylindrique (16A) fixée à la partie de corps cylindrique (10A) sur sa circonférence extérieure, la gaine (16A) entourant le ressort flexible (12A) et présentant une ouverture (17) à travers laquelle dépasse ladite partie de contact (14) du ressort flexible (12A).

5. Appareil selon l'une quelconque des revendications précédentes, comportant une série desdits ressorts flexibles (12A) espacés autour de l'axe de la partie de corps cylindrique (10A).

6. Appareil selon l'une quelconque des revendications précédentes, en combinaison avec le tube (1) à inspecter, dans lequel le tube (1) est muni d'une plaque de support contiguë (4) qui le maintient en position déterminée et provoque une modification originale du couplage électromagnétique entre les enroulements (24, 26) du capteur de courants de Foucault (22A) et le tube (1) lorsque l'explorateur (6) passe dans le tube au niveau de la plaque de support (4) pour générer par là une modification originale dudit second signal et établir un point de repère identifiant un point du parcours de l'explorateur à travers le tube.

7. Appareil selon la revendication 6, dans lequel le tube (1) est muni d'une série de plaques de support espacées (4) qui maintiennent le tube dans une position déterminée et provoquent chacune une modification originale du couplage magnétique entre l'enroulement (24, 26) du capteur de courants de Foucault (22A) et le tube (1) lorsque l'explorateur (6) passe dans le tube au niveau de chacune des plaques de support (4) pour établir par là une série de points de repère en nombre égal à celui de plaques de support franchies par l'explorateur.

FIG. 1

FIG. 5

TO FIG. 6

TO FIG. 6

FROM FIG. 5

FROM FIG. 5

SCOPE

BRIDGE UNBALANCE SIGNAL GENERATORS

MULTI CHANNEL TAPE RECORDER

MULTI TRACE STRIP CHART RECORDER

FIG. 6

SUPPORT PLATE

EDDY CURRENT SIGNAL

SIGNAL

STRAIN GAUGE SIGNAL

TUBE DENT

DISTANCE

FIG. 7

FIG. 2

FIG. 4

FIG. 2A

FIG. 3

0 046 079